# EUROPÄISCHE PATENTSCHRIFT

(11) **EP 1 726 129 B1**
(45) Veröffentlichungstag und Bekanntmachung des Hinweises auf die Patenterteilung: **20.06.2007**
(21) Anmeldenummer: 05735179.3
(22) Anmeldetag: 14.03.2005
(51) Int. Cl.: H04L 12/28, H04L 12/56, H04L 29/06, H04M 1/725

(54) **Verfahren und Vorrichtung zum adaptiven aktivieren oder deakti vieren der Koordination der Funk-Aktivitäten zweier Mobilfunk-Sende- und/oder -Empfangseinrichtungen**
Method and device for adaptively activate of deactivate the co-ordination of radiocommunications activeties of two mobile transmitting and/or receiving devices
Procédé et dispositif pour activer ou désactiver de manière adaptive la coordination des activités de radiocommunications de deux dispositifs d'émission et/ou de réception radiocommunications mobiles

(30) Priorität: 18.03.2004 DE 102004013494
(43) Veröffentlichungstag der Anmeldung: 29.11.2006
(73) Patentinhaber: Infineon Technologies AG, 81669 München (DE)
(72) Erfinder: DÜRDODT, Christian, 44869 Bochum (DE); FELLBECKER, Britta, 81549 München (DE); HELLFAJER, Roland, 44869 Bochum (DE)
(74) Vertreter: Graf Lambsdorff, Matthias
(86) Internationale Anmeldenummer: PCT/DE2005/000464
(87) Internationale Veröffentlichungsnummer: WO 2005/091563

(56) Entgegenhaltungen:
- EP-A- 1 119 137
- WO-A-03/105418
- CHIASSERINI C F ET AL: "Coexistence mechanisms for interference mitigation between IEEE 802.11 WLANs and bluetooth" PROCEEDINGS IEEE INFOCOM 2002. THE CONFERENCE ON COMPUTER COMMUNICATIONS. 21ST. ANNUAL JOINT CONFERENCE OF THE IEEE COMPUTER ANDCOMMUNICATIONS SOCIETIES. NEW YORK, NY, JUNE 23 - 27, 2002, PROCEEDINGS IEEE INFOCOM. THE CONFERENCE ON COMPUTER COMMUNICA, Bd. VOL. 1 OF 3. CONF. 21, 23. Juni 2002 (2002-06-23), Seiten 590-598, XP010593620 ISBN: 0-7803-7476-2
- WONG K K ET AL: "Coverage of 802.11g WLANs in the presence of bluetooth interference" PERSONAL, INDOOR AND MOBILE RADIO COMMUNICATIONS, 2003. PIMRC 2003. 14TH IEEE PROCEEDINGS ON SEPT. 7-10, 2003, PISCATAWAY, NJ, USA,IEEE, Bd. 2, 7. September 2003 (2003-09-07), Seiten 2027-2031, XP010677915 ISBN: 0-7803-7822-9

## Beschreibung

Die Erfindung betrifft ein Verfahren zum Aktivieren oder Deaktivieren der Koordination der Funk-Aktivitäten zweier Mobilfunk-Sende- und/oder -Empfangseinrichtungen, wobei zur Koordination zwischen beiden Sende- und/oder Empfangseinrichtungen oder zwischen jeder Sende- und/oder Empfangseinrichtung und einer gemeinsamen, die Koordination steuernden Einrichtung ein leitungsgebundener Informationsaustausch stattfindet. Ferner betrifft die Erfindung eine entsprechende Vorrichtung.

Die Integration zweier verschiedenartiger Mobilfunk-Transceiver, beispielsweise nach einem Standard der IEEE-802.11-Arbeitsgruppe (z. B. IEEE-802.11b) - nachfolgend vereinfachend als IEEE-802.11-Standard oder mit dem Attribut WLAN (Wireless Local Area Network) bezeichnet - und dem Bluetooth-Standard in ein Gerät kann zu einer einseitigen oder gegenseitigen Störung beider Transceiver führen. Insbesondere wenn beide Transceiver dieselben oder überschneidende Frequenzbereiche verwenden, kann deren gleichzeitige Funk-Aktivität das Übertragungsverhalten eines oder beider Transceiver negativ beeinflussen. Senden beide Transceiver zeitgleich, kommt es zu einer Überlagerung beider Sendesignale, welche von den entsprechenden Kommunikationspartnern nur schwer getrennt werden können. Sendet ein Transceiver, während der andere Transceiver empfängt, wird aufgrund einer geringen Antennenisolation die Empfangsempfindlichkeit deutlich eingeschränkt. Ein ähnlicher Einfluss ist auch dann zu verzeichnen, wenn die Frequenzbereiche beider Transceiver dicht nebeneinander liegen, da sich in diesem Fall die Seitenbänder störend auf das Übertragungsverhalten auswirken.

Der Einfluss der einseitigen oder gegenseitigen Störung kann durch eine geeignete Einschränkung der.jeweils genutzten Frequenzbereiche oder durch eine zeitliche Koordination der Funk-Aktivitäten verringert werden. Derartige Maßnahmen zur Koordination der Funk-Aktivitäten werden auch als Koexistenz- oder Interoperabilitätsmaßnahmen bezeichnet. Insbesondere durch die zeitliche Koordination der Funk-Aktivitäten kann der Einfluss einer einseitigen oder gegenseitigen Störung nahezu ausgeschlossen werden. Um eine zeitliche Koordination der Funk-Aktivitäten zu ermöglichen, ist ein leitungsgebundener Informationsaustausch zwischen beiden Transceivern oder zwischen jedem der Transceiver und einer gemeinsamen, die Koordination steuernden Einrichtung, insbesondere einem gemeinsamen Hauptprozessor (Host), notwendig. Anhand der ausgetauschten Information wird entschieden, welcher der Transceiver Funk-Aktivitäten durchführen darf und welcher der Transceiver die Funk-Aktivitäten verschieben oder abbrechen muss.

Grundsätzliche Empfehlungen für die Koexistenz zweier Transceiver sind in dem vorläufigen IEEE-Standard-Dokument IEEE P802.15.2/Draft #09, 24. März 2003, beschrieben.

Aus der Druckschrift EP 1 119 137 A1 ist ein Gerät bekannt, in welchem sowohl ein Bluetooth-Transceiver als auch ein IEEE-802.11-Transceiver integriert sind. Um Störungen durch zeitgleiche Funk-Aktivitäten beider Transceiver zu vermeiden, wird in der Druckschrift vorgeschlagen, eine sogenannte Interoperabilitäts-Einrichtung (interoperability device) zur zeitlichen Koordination der Funk-Aktivitäten vorzusehen. Dabei kontrolliert die Interoperabilitäts-Einrichtung den Datenfluss jeweils zwischen den beiden Standard-spezifischen Treibern, dem Bluetooth- und dem WLAN-Treiber, und den der physikalischen Schnittstelle zugeordneten Transceiver-Elementen. Die Interoperabilitäts-Einrichtung verhindert, dass beide Transceiver zeitgleich senden. Optional wird verhindert, dass ein Transceiver sendet, wenn der andere Transceiver zeitgleich empfängt oder sendet. Durch diese Vorgehensweise kann gewährleistet werden, dass die Funktionalität beider Transceiver grundsätzlich, sogar bei sehr schlechten Umgebungsbedingungen oder kritischen Anwendungsfällen, erhalten bleibt. Nachteilig an einer derartigen zeitlichen Koordination der Funk-Aktivitäten der beiden Transceiver ist, dass in vielen Anwendungs- oder Betriebsfällen, bei denen keine einseitige oder gegenseitige störende Beeinflussung zu verzeichnen ist, die Übertragungskapazität eines oder der beiden Transceiver durch die Koordination der Funk-Aktivitäten unnötig reduziert wird.

Carla F. Chiasserini et al. beschreibt in "Coexistence Mechanisms for Interference Mitigation between IEEE 802.11 WLANs and Bluetooth", PROCEEDINGS IEEE INFOCOM 2002, einen V-OLA-(Voice Overlap Avoidance) Mechanismus, der in einer WLAN-Station durchgeführt wird, und einen D-OLA- (Data Overlap Avoidance) Mechanismus, der in einer Bluetooth-Station durchgeführt wird.

Es ist daher Aufgabe der Erfindung, ein Verfahren zum Betrieb zweier Mobilfunk-Sende- und/oder -Empfangseinrichtungen anzugeben, welches einen störungsfreien Betrieb beider Sende- und/oder Empfangseinrichtungen gewährleistet, jedoch eine unnötige Einschränkung der Übertragungskapazität eines oder der beiden Sende- und/oder Empfangseinrichtungen vermeidet. Ferner ist es Aufgabe der Erfindung, eine entsprechende Vorrichtung anzugeben.

Die der Erfindung zugrunde liegende Aufgabenstellung wird durch die Merkmale der unabhängigen Ansprüche gelöst.

Das erfindungsgemäße Verfahren gemäß Anspruch 1 geht von der Möglichkeit der Koordination der Funk-Aktivitäten einer ersten Mobilfunk-Sende- und/oder -Empfangseinrichtung und einer zweiten Mobilfunk-Sende- und/oder -Empfangseinrichtung aus. Eine Funk-Aktivität im Sinne der Anmeldung kann entweder in einer Sende- oder einer Empfangs-Aktivität bestehen. Zeitgleiche Funk-Aktivitäten beider Sende- und/oder Empfangseinrichtungen können Übertragungsstörungen verursachen. Zur Koordination findet zwischen beiden Sende- und/oder Empfangseinrichtungen oder zwischen jeder der Sende- und/oder Empfangseinrichtungen und einer gemeinsamen, die Koordination steuernden Einrichtung ein leitungsgebundener Informationsaustausch statt.

Das erfindungsgemäße Verfahren umfasst zwei Schritte: In einem ersten Verfahrensschritt wird ein Wert mindestens einer charakteristischen Größe ermittelt. Diese mindestens eine charakteristische Größe ist für das Erfordernis der Koordination der Funk-Aktivität der ersten Sende- und/oder Empfangseinrichtung und/oder der Koordination der Funk-Aktivität der zweiten Sende- und/oder Empfangseinrichtung charakteristisch. In einem zweiten Verfahrensschritt werden die Koordination der Funk-Aktivität der ersten Sende- und/oder Empfangseinrichtung und/oder die Koordination der Funk-Aktivität der zweiten Sende- und/oder Empfangseinrichtung in Abhängigkeit von dem Wert der mindestens einen charakteristischen Größe aktiviert oder deaktiviert.

Durch die erfindungsgemäße adaptive Aktivierung oder Deaktivierung der Koordination der Funk-Aktivitäten wird ein störungsfreier Betrieb beider Sende- und/oder Empfangseinrichtungen gewährleistet. Dabei wird vermieden, dass die Übertragungskapazität einer oder beider Sende- und/oder Empfangseinrichtungen unnötig eingeschränkt wird. Dem Verfahren liegt dabei die Erkenntnis zugrunde, dass die Koordination der Funk-Aktivitäten, insbesondere zur Verhinderung einer zeitgleichen Funk-Aktivität, je nach Applikation und der momentanen Umgebungssituation der beiden Sende- und/oder Empfangseinrichtungen notwendig oder nicht notwendig und damit sogar einschränkend ist. Das Verfahren ermöglicht es, dass für den jeweiligen Anwendungsfall und die momentanen Umgebungsbedingungen adaptiv entschieden werden kann, ob eine Koordination der Funk-Aktivitäten zur Gewährleistung eines störungsfreien Betriebs geboten ist oder nicht. Es ist daher auch nicht notwendig, die Koordination der Funk-Aktivitäten abhängig von einer Applikation, beispielsweise in Abhängigkeit des Antennenabstands, zu implementieren oder nicht zu implementieren, da die Koordination ohnehin adaptiv aktiviert oder deaktiviert wird. Nach dem erfindungsgemäßen Verfahren arbeitende Sende- und/oder Empfangseinrichtungen sind daher universell einsetzbar. Dies ermöglicht eine Reduzierung des Produktportfolios auf universell einsetzbare Standardkomponenten, während zusätzlich eine Anpassung der Koexistenzmaßnahmen in Hinblick auf die entsprechende Applikation wegfällt.

Darüber hinaus bietet das erfindungsgemäße Verfahren die Möglichkeit, die Koordination der Funk-Aktivität der ersten Sende- und/oder Empfangseinrichtung und die Koordination der Funk-Aktivität der zweiten Sende- und/oder Empfangseinrichtung unabhängig von einander zu aktivieren oder zu deaktivieren. Hierdurch können Unterschiede hinsichtlich der Eigenschaften der beiden Sende- und/oder Empfangseinrichtungen, beispielsweise deutlich unterschiedliche Ausgangsleistungen oder Eingangsempfindlichkeiten, auch in Bezug auf die Koexistenzmaßnahmen berücksichtigt werden.

Vorteilhafterweise ist die mindestens eine für das Erfordernis der Koordination charakteristische Größe ein Eingangssignal-Pegel und/oder eine Datenfehlerrate, insbesondere eine Bit- und/oder eine Paketfehlerrate. Dabei kann die mindestens eine charakteristische Größe von einem Empfänger der beiden Sende- und/oder Empfangseinrichtungen bestimmt werden. Ferner kann auch die Verwendung mehrerer charakteristischer Größen vorgesehen werden, wobei jede zweier gleichartiger charakteristischer Größen von jeweils einem Empfänger der beiden Sende- und/oder Empfangseinrichtungen bestimmt wird.

Nach einer vorteilhaften Ausführungsform des erfindungsgemäßen Verfahrens wird das Ermitteln des Werts der mindestens einen charakteristischen Größe und das Aktivieren und Deaktivieren der Koordination der Funk-Aktivität der ersten Sende- und/oder Empfangseinrichtung und der Koordination der Funk-Aktivität der zweiten Sende- und/oder Empfangseinrichtung seitens einer der beiden Sende- und/oder Empfangseinrichtungen durchgeführt. Hierbei bietet es sich an, dass diese Aufgaben der Sende- und/oder Empfangseinrichtung mit der geringeren typischen Ausgangsleistung zugeordnet sind. Der Funkverkehr der Sende- und/oder Empfangseinrichtung mit der geringeren typischen Ausgangsleistung wird im Allgemeinen durch zeitgleiche Funk-Aktivitäten beider Sende- und/oder Empfangseinrichtungen stärker gestört als der Funkverkehr der Sende- und/oder Empfangseinrichtung mit der höheren typischen Ausgangsleistung. Daher ist es zweckmäßig, die mindestens eine für das Erfordernis der Koordination der Funk-Aktivität beider Sende- und/oder Empfangseinrichtungen charakteristische Größe seitens der Sende- und/oder Empfangseinrichtung mit der geringeren typischen Ausgangsleistung zu bestimmen. Wird zusätzlich das Aktivieren und Deaktivieren der Koordination gänzlich seitens der Sende- und/oder Empfangseinrichtung mit der geringeren typischen Ausgangsleistung vorgenommen, wird das Interface zwischen beiden Sende- und/oder Empfangseinrichtungen vereinfacht. Grundsätzlich wäre es im Sinne der Erfindung auch denkbar, nur die Ermittlung der charakteristischen Größen in der Sende- und/oder Empfangseinrichtung mit der geringeren typischen Ausgangsleistung vorzunehmen. Alternativ können die vorstehend genannten Aussagen hinsichtlich der Sende- und/oder Empfangseinrichtung mit der geringeren typischen Ausgangsleistung in analoger Weise auch auf die Sende- und/oder Empfangseinrichtung mit der schlechteren typischen Eingangsempfindlichkeit übertragen werden.

Nach einer zu der vorstehend genannten Ausführungsform alternativen Ausführungsform kann der Verfahrensablauf auch auf beide Sende- und/oder Empfangseinrichtungen verteilt werden. Dabei gliedert sich der oben genannte erste Verfahrensschritt in zwei Teilschritte: In dem ersten Teilschritt wird ein Wert für mindestens eine erste charakteristische Größe seitens der zweiten Sende- und/oder Empfangseinrichtung ermittelt. Diese erste charakteristische Größe ist für das Erfordernis der Koordination der Funk-Aktivität der ersten Sende- und/oder Empfangseinrichtung charakteristisch. In dem zweiten Teilschritt wird ein Wert für mindestens eine zweite charakteristische Größe seitens der ersten Sende- und/oder Empfangseinrichtung ermittelt, welche für das Erfordernis der Koordination der Funk-Aktivität der zweiten Sende- und/oder Empfangseinrichtung charakteristisch ist. In ähnlicher Weise kann sich auch der oben genannte zweite Verfahrensschritt in zwei Teilschritte gliedern: In dem ersten Teilschritt wird die Koordination der Funk-Aktivität der ersten Sende- und/oder Empfangseinrichtung in Abhängigkeit von dem ermittelten Wert der ersten charakteristischen Größe seitens der zweiten Sende- und/oder Empfangseinrichtung aktiviert oder deaktiviert. In einem zweiten Teilschritt wird die Koordination der Funk-Aktivität der zweiten Sende- und/oder Empfangseinrichtung in Abhängigkeit von dem ermittelten Wert der zweiten charakteristischen Größe seitens der ersten Sende- und/oder Empfangseinrichtung aktiviert oder deaktiviert.

Bei dieser alternativen Ausführungsform wird seitens einer Sende- und/oder Empfangseinrichtung entschieden, ob eine Koordination der Funk-Aktivität der jeweils anderen Sende- und/oder Empfangseinrichtung notwendig ist und daher aktiviert oder deaktiviert werden sollte. Die jeweilige charakteristische Größe kann dabei auch als Maß für die Störung des Funkverkehrs der diese Größe ermittelnden Sende- und/oder Empfangseinrichtung angesehen werden. Wird also beispielsweise die erste Sende- und/oder Empfangseinrichtung in ihrem Funkverkehr gestört (vornehmlich durch die zweite Sende- und/oder Empfangseinrichtung), bewirkt diese erfindungsgemäß, dass die Koordination der Funk-Aktivität der zweiten Sende- und/oder Empfangseinrichtung aktiviert wird. Wird der Funkverkehr der zweiten Sende- und/oder Empfangseinrichtung jedoch nicht beeinträchtigt (beispielsweise weil die Sende- und/oder Empfangsleistung der zweiten Sende- und/oder Empfangseinrichtung höher ist), wird die Koordination der Funk-Aktivität der ersten Sende- und/oder Empfangseinrichtung seitens der zweiten Sende- und/oder Empfangseinrichtung deaktiviert. Da die erste Sende- und/oder Empfangseinrichtung sich offensichtlich nicht negativ auf den Funkverkehr der zweiten Sende- und/oder Empfangseinrichtung auswirkt, ist es nicht notwendig und aufgrund der mit der Koordination verbundenen Einschränkung auch nicht zweckmäßig, die Funk-Aktivität der ersten Sende- und/oder Empfangseinrichtung zu koordinieren. Bei der alternativen Ausführungsform des Verfahrens kann also entsprechend der vorherrschenden Beeinträchtigung des jeweiligen Funkverkehrs die Koordination der einen Sende- und/oder Empfangseinrichtung unabhängig von der Koordination der jeweils anderen Sende- und/oder Empfangseinrichtung betrieben werden.

Grundsätzlich wäre es auch denkbar, lediglich die Ermittlung der ersten und zweiten charakteristischen Größe seitens der zweiten bzw. ersten Sende- und/oder Empfangseinrichtung durchzuführen.

Vorteilhafterweise arbeitet eine der beiden Sende- und/oder Empfangseinrichtungen nach dem Bluetooth-Standard. Dabei ist es von Vorteil, wenn diese Sende- und/oder Empfangseinrichtung nach dem Bluetooth-Standard Version 1.2 oder höher arbeitet. In diesem Fall ist es besonders vorteilhaft, wenn die seitens dieser Sende- und/oder Empfangseinrichtung ermittelte charakteristische Größe die Angabe, ob eine Funkverbindung nach dem Bluetooth-spezifischen Adaptive-Frequency-Hopping-Verfahren vorliegt oder nicht, ist. Alternativ oder zusätzlich kann die Anzahl der als gut oder schlecht klassifizierten Kanäle oder Kanalpaare bei einer Funkverbindung nach dem Bluetooth-spezifischen Adaptive-Frequency-Hopping-Verfahren als charakteristische Größe herangezogen werden.

Der Bluetooth-Standard, welcher ein Frequenzsprungverfahren erfordert, bietet ab der Version 1.2 die zusätzliche Möglichkeit der adaptiven Zuweisung der Frequenzkanäle. Dabei werden nur derartige Frequenzkanäle genutzt, welche ein geringes Störaufkommen aufweisen. Im Bluetooth-Standard Version 1.2 wird ein Frequenzsprungverfahren, bei welchem die zu verwendenden Frequenzkanäle adaptiv zugewiesen werden, auch als AFH (Adaptive Frequency Hopping) bezeichnet. Bei der Verwendung des AFH-Verfahrens wird den maximal zur Verfügung stehenden 79 Bluetooth-Kanälen anhand von Referenzmessungen je nach Störaufkommen jeweils das Attribut "good" oder "bad" zugewiesen. Bei einer anschließenden Übertragung basierend auf dem AFH-Verfahren werden grundsätzlich nur die mit dem Attribut "good" versehenen Kanäle verwendet. Dabei ist die minimale Anzahl N_{MIN} der mit dem Attribut "good" versehenen Kanäle für das AFH-Verfahren auf 20 begrenzt. Für Funk-Verbindungen einer nach dem Bluetooth-Standard Version 1.2 arbeitenden Sende- und/oder Empfangseinrichtung zu anderen Bluetooth-fähigen Geräten, welche nach dem Bluetooth-Standard Version 1.1 oder 1.0 arbeiten, kann das AFH-Verfahren nicht angewendet werden. Ist es nicht möglich, das AFH-Verfahren seitens einer Bluetooth-fähigen Sende- und/oder Empfangseinrichtung aufgrund des Kommunikationspartners anzuwenden, ist es zur Gewährleistung eines ungestörten Funkverkehrs dieser Sende- und/oder Empfangseinrichtung zwingend erforderlich, dass die Funk-Aktivität der anderen Sende- und/oder Empfangseinrichtung koordiniert wird. Die in der Bluetooth-fähigen Sende- und/oder Empfangseinrichtung bekannte Angabe, ob eine Funkverbindung nach dem AFH-Verfahren vorliegt, kann daher zur Steuerung der Koexistenzmaßnahmen genutzt werden. Insofern kann diese Angabe als charakteristische Größe zur Aktivierung oder Deaktivierung der Koordination der Funk-Aktivitäten, insbesondere zur Koordination der anderen Sende- und/oder Empfangseinrichtung, verwendet werden. Wird eine Bluetooth-Verbindung ohne Verwendung des AFH-Verfahrens aufgebaut, so ist es zweckmäßig, die Koordination der Funk-Aktivitäten, insbesondere die Koordination der Funk-Aktivität der anderen Sende- und/oder Empfangseinrichtung, grundsätzlich zu aktivieren bzw. aktiv zu halten. Alternativ oder optional kann die Anzahl der als "good" oder "bad" klassifizierten Kanäle zur Steuerung der Koexistenzmaßnahmen genutzt werden. Beispielsweise kann als Schaltschwelle die minimale Anzahl N_{MIN} = 20 verwendet werden. Sinkt die Anzahl der mit dem Attribut "good" versehenen Kanäle für das AFH-Verfahren unter die Schwelle von N_{MIN} = 20, wird die Koordination der Funk-Aktivitäten, insbesondere die Koordination der Funk-Aktivität der zweiten Sende- und/oder Empfangseinrichtung, grundsätzlich aktiviert.

Es ist von Vorteil, wenn eine der beiden Sende- und/oder Empfangseinrichtungen nach dem IEEE-802.11-Standard, insbesondere nach dem IEEE-802.11k-Standard, arbeitet. Der noch nicht abschließend spezifizierte IEEE-802.11k-Standard bietet den Vorteil, dass dieser eine verbesserte Signalqualitätsüberwachung bereitstellt. Hierdurch wird die Messung und Auswertung von für die Signalqualität charakteristischen Größe, beispielsweise der empfangene Signal-Pegel, verbessert und vereinfacht. Insbesondere kann auf diese intern bestimmten Größen sehr einfach zugegriffen werden. Dies ermöglicht es, diese Größen als erfindungsgemäße charakteristische Größen zur Aktivierung oder Deaktivierung der Koordination der Funk-Aktivitäten heranzuziehen.

Die erfindungsgemäße Vorrichtung gemäß Anspruch 9 geht von der Möglichkeit der Koordination der Funk-Aktivitäten einer ersten Mobilfunk-Sende- und/oder -Empfangseinrichtung und einer zweiten Mobilfunk-Sende- und/oder -Empfangseinrichtung aus. Zur Koordination findet zwischen beiden Sende- und/oder Empfangseinrichtungen oder zwischen jeder der Sende- und/oder Empfangseinrichtungen und einer gemeinsamen, die Koordination steuernden Einrichtung ein leitungsgebundener Informationsaustausch statt.

Die erfindungsgemäße Vorrichtung umfasst mindestens ein Bestimmungs-Mittel zum Ermitteln mindestens einer charakteristischen Größe. Diese mindestens eine charakteristische Größe ist für das Erfordernis der Koordination der Funk-Aktivität der ersten Sende- und/oder Empfangseinrichtung und/oder der Koordination der Funk-Aktivität der zweiten Sende- und/oder Empfangseinrichtung charakteristisch. Ferner umfasst die erfindungsgemäße Vorrichtung mindestens ein Schalt-Mittel zum Aktivieren oder Deaktivieren der Koordination der Funk-Aktivität der ersten Sende- und/oder Empfangseinrichtung und/oder der Koordination der Funk-Aktivität der zweiten Sende- und/oder Empfangseinrichtung. Dieses mindestens eine Schalt-Mittel wird in Abhängigkeit von der mindestens einen charakteristischen Größe gesteuert.

Bei dem mindestens einen Bestimmungs-Mittel und dem mindestens einen Schalt-Mittel ist es im Sinne der Anmeldung nicht notwendig, dass diese in dedizierter Hardware realisiert werden. Diese Mittel können auch in Software, welche auf einem Prozessor, insbesondere auf einem DSP, abgearbeitet wird, implementiert werden.

Vorteilhafterweise sind das oder die Schalt-Mittel zum Unterbinden des zur Koordination notwendigen Informationsaustausches ausgelegt. Hierdurch wird ermöglicht, die Koordination der Funk-Aktivität auf einfache Weise zu steuern. Wird der zur Koordination der Funk-Aktivität der jeweiligen Sende- und/oder Empfangseinrichtung in diese Einrichtung über eine leitungsgebundene Schnittstelle (Koexistenzschnittstelle) einzulesende Informationsfluss (Koexistenzsignale) durch ein Schalt-Mittel unterbunden, wird damit auf einfache Weise die Koordination der Funk-Aktivität dieser Sende- und/oder Empfangseinrichtung deaktiviert. Umgekehrt wird die Koordination der Funk-Aktivität einer Sende- und/oder Empfangseinrichtung aktiviert und aktiv gehalten, wenn die in diese Einrichtung einzulesenden Koexistenzsignale von dem Schalt-Mittel nicht unterbunden werden. Das Unterbinden des Informationsaustausches kann durch geschaltetes Unterbrechen der physikalischen Koexistenzschnittstelle oder auch Software-gesteuert auf höheren Protokollschichten stattfinden. Darüber hinaus bietet die Aktivierung oder Deaktivierung der Koordination über ein Ermöglichen bzw. Unterbinden der Koexistenzsignalisierung den Vorteil, dass eine erfindungsgemäß arbeitende Sende- und/oder Empfangseinrichtung unabhängig von der Applikation einsetzbar ist: Ist nur eine erste Sende- und/oder Empfangseinrichtung vorhanden, erhält diese keine Koexistenzsignale. Die Koordination der Funk-Aktivität dieser Sende- und/oder Empfangseinrichtung ist in diesem Fall nicht notwendig und ist automatisch aufgrund nicht einlesbarer Koexistenzsignale deaktiviert. Eine explizite Anpassung der Sende- und/oder Empfangseinrichtung an diese Applikation ist also nicht notwendig. Das gleiche gilt für den Fall, dass die zweite Sende- und/oder Empfangseinrichtung ausgeschaltet ist. Auch hier ist eine Koordination der Funk-Aktivität der ersten Sende- und/oder Empfangseinrichtung in diesem Betriebsmodus nicht notwendig. Die Koordination der Funk-Aktivität ist automatisch aufgrund nicht einlesbarer Koexistenzsignale deaktiviert.

Weitere vorteilhafte Ausgestaltungen der Erfindung sind in den Unteransprüchen angegeben.

Die Erfindung wird nachfolgend anhand zweier Ausführungsbeispiele unter Bezugnahme auf die Zeichnungen näher erläutert; in diesen zeigen:
- Fig. 1: eine Darstellung der geforderten spektralen Sende- maske nach dem IEEE-802.11-Standard;
- Fig. 2: ein Blockdiagramm eines ersten Ausführungsbeispiels der erfindungsgemäßen Aktivierung und Deaktivierung der Koordination der Funk-Aktivitäten; und
- Fig. 3: ein Blockdiagramm eines zweiten Ausführungsbeispiels der erfindungsgemäßen Aktivierung und Deaktivierung der Koordination der Funk-Aktivitäten.

Bei den nachfolgenden Ausführungsbeispielen wird davon ausgegangen, dass zwei Transceiver in einem gemeinsamen Gerät, beispielsweise eine Bluetooth/WLAN-Steckkarte für einen Laptop oder Desktop-PC, integriert sind. Bei den beiden Transceivern handelt es sich um einen Bluetooth-Transceiver und einen WLAN-Transceiver, welche mit dem Bluetooth-Standard Version 1.2 bzw. mit dem IEEE-802.11-Standard kompatibel sind.

Der Antennenabstand beider Transceiver bestimmt die Antennenisolation und ist maßgeblich für den Störeinfluss, der durch die Funk-Aktivität eines der Transceiver auf die Funk-Aktivität des anderen der Transceiver ausgeübt wird.

Der nach dem Bluetooth-Standard arbeitende Transceiver verwendet ein Frequenzsprungverfahren, bei dem mit einer Sprungrate von max. 1600 Sprüngen (Hops) pro Sekunde die Übertragungsfrequenz und damit der Übertragungskanal gewechselt wird. Zur Übertragung wird das lizenzfreie ISM-Band (Industrial Scientific Medical) von 2,400 bis 2,485 GHz genutzt, welches gemäß dem Bluetooth-Standard in 79 Kanäle mit jeweils einer Bandbreite von 1 MHz unterteilt ist.

Laut der Spezifikation des IEEE-802.11-Standards operiert der WLAN-Transceiver in dem gleichen Frequenzbereich. Die Bandbreite eines WLAN-Kanals beträgt 22 MHz, wodurch sich drei überschneidungsfreie Kanäle im betrachteten Frequenzbereich von 2,400 bis 2,485 GHz ergeben. Im Gegensatz zum Bluetooth-Standard ist dabei der verwendete Kanal für die Zeitdauer einer Verbindung statisch. Ohne geeignete Koexistenzmaßnahmen, wodurch die Funk-Aktivitäten der Transceiver koordiniert werden, käme es unter Umständen bei einer gleichzeitigen Funk-Aktivität beider Transceiver zu einem massiven Störeinfluss des einen Transceiver auf den anderen Transceiver und/oder umgekehrt.

Um Störungen der Transceiver zu vermeiden, kann das im Bluetooth-Standard Version 1.2 spezifizierte und vorstehend bereits erwähnte AFH-Verfahren für den Bluetooth-Transceiver verwendet werden. Das AFH-Verfahren ist grundsätzlich nur dann anwendbar, wenn der Bluetooth-Transceiver eine Verbindung zu einem weiteren Gerät unterhält, welches gemäß der Version 1.2 des Bluetooth-Standards arbeitet. Liegt ein derartiger Fall vor, so dass das AFH-Verfahren seitens des Bluetooth-Transceivers angewendet werden kann, werden die vom WLAN-Transceiver genutzten Frequenzbereiche für den Funkver-kehr des Bluetooth-Transceivers gemäß dem AFH-Verfahren als "bad" klassifiziert und demnach nicht verwendet. Kann das AFH-Verfahren seitens des Bluetooth-Transceivers nicht verwendet werden, müssen die Funk-Aktivitäten des Bluetooth-Transceivers und/oder des WLAN-Transceivers zwingend koordiniert werden, um Störungen zu verhindern. Die Koordination der Funk-Aktivitäten sollte ausschließen, dass seitens beider Transceiver zeitgleich eine Funk-Aktivität stattfindet. Insbesondere ist auszuschließen, dass beide Transceiver zeitgleich senden oder beide Transceiver zeitgleich empfangen oder ein Transceiver sendet, während der andere Transceiver zeitgleich empfängt. Arbeitet der Bluetooth-Transceiver nach dem AFH-Verfahren, ist die zeitliche Koordination der Funk-Aktivitäten unter Umständen unnötig oder gar einschränkend, da durch die Koordination Übertragungskapazität verloren gehen kann. Daher wird erfindungsgemäß die Deaktivierung der zeitlichen Koordination an das Vorliegen einer Verbindung nach dem AFH-Verfahren gekoppelt.

Liegt eine Verbindung nach dem AFH-Verfahren vor, kann es dennoch aufgrund einer Störung notwendig sein, eine zeitliche Koordination der Funk-Aktivitäten der Transceiver vorzunehmen. Die Größe der Störung hängt dabei unter anderem von der Signalleistung des sendenden Transceivers, der Unterdrückung des Sendesignals außerhalb des Sendefrequenzbands (bestimmt durch die Bandbreite) des sendenden Transceivers, einem Bandbreite-Korrektur-Faktor, dem Empfangsfilter des empfangenden Transceivers und der Antennenisolation der beiden Transceiver ab. Hinsichtlich dieser Störung sind grundsätzlich zwei Fälle zu unterscheiden:
1. Sendet einer der beiden Transceiver, während der andere Transceiver empfängt, kann das Sendesignal des sendenden Transceivers den empfangenden Transceiver blockieren. Dies ist dann der Fall, wenn die für den empfangenden Transceiver störende Signalleistung des sendenden Transceivers, beispielsweise des WLAN-Transceivers, am Ort der Antenne des empfangenden Transceivers, beispielsweise des Bluetooth-Transceivers, einen gewissen Schwellwert übersteigt, ab dem der Empfänger des empfangenden Transceivers nicht mehr linear arbeitet und somit ein zeitgleich empfangenes Nutzsignal nicht mehr detektieren kann. Man spricht in diesem Fall auch von einer Übersteuerung des Empfängers. Ein derartiges Blockieren kann auch dann auftreten, wenn die störende Signalleistung des sendenden Transceivers außerhalb des eigentlichen Empfangsfrequenzbands liegt, da der Empfangsfilter nur eine endliche Sperrwirkung besitzt. Dabei ist die Gefahr eines Blockierens des Empfängers um so größer, je geringer der Antennenabstand der beiden Transceiver und somit je geringer die Antennenisolation ist. Ferner ist die Gefahr des Blockierens umso größer, je größer die von dem sendenden Transceiver abgestrahlte Leistung ist. Da die Sendeleistung des sendenden Transceivers an die Entfernung zu einem weiteren mit diesem Transceiver über Funk verbundenen Mobilfunkgerät laufend angepasst wird, kann sich auch der Empfangszustand des empfangenden Transceivers, d. h. ob ein Blockieren des Empfängers vorliegt oder nicht, laufend ändern. Liegen statisch oder dynamisch derartige Empfangsbedingungen für den empfangenden Transceiver vor, dass ein Blockieren zu erwarten ist, müssen die Sende-Aktivität des sendenden Transceivers und die Empfangs-Aktivität zwingend zeitlich zueinander koordiniert werden, so dass eine gleichzeitige Funk-Aktivität beider Transceiver ausgeschlossen werden kann. Kann ein Blockieren des Empfängers aufgrund günstiger Empfangsbedingungen ausgeschlossen werden, ist eine zeitliche Koordination beider Transceiver nur unter Umständen (vgl. 2.) notwendig. Als Indikator, ob eine zeitliche Koordination der Funk-Aktivitäten notwendig ist, kann in diesem Fall der Wert des empfangenen Signal-Pegels des empfangenden Transceivers herangezogen werden, der bei der Gefahr eines Blockierens unüblich hoch ist. Der Wert des Signal-Pegels steht im Empfänger jedes Transceivers als RSSI-Information P_{RSSI} (Radio Signal Strength Indicator) intern zur Verfügung. Übersteigt der Signal-Pegel P_{RSSI} den Schwellwert P_{IN,MAX} des Signal-Pegels, ab dem die Linearität des Empfängers des empfangenden Transceivers nicht mehr gewährleistet werden kann, ist eine zeitliche Koordination der Funk-Aktivitäten notwendig. Liegt ein Blockieren des Empfängers des Bluetooth-Transceivers vor, so werden im Allgemeinen alle Bluetooth-Kanäle als "bad" klassifiziert. Daher kann als weitere Indikation für das Vorliegen eines Blockierens des Empfängers des Bluetooth-Transceivers auch die Anzahl der als "good" oder "bad" klassifizierten Kanäle herangezogen werden, insbesondere ob die Anzahl N der als "good" klassifizierten Kanäle geringer als die geforderte minimale Anzahl N_{MIN} ist. Alternativ kann für den Fall, dass der Sender des Bluetooth-Transceivers den Empfänger des WLAN-Transceivers stört, als Indikation für das Blockieren des Empfängers des WLAN-Transceivers das Überschreiten einer bestimmten Bit- und/oder Paketfehlerrate verwendet werden.
2. Zusätzlich zu der unter Punkt 1. dargestellten Gefahr, dass ein generelles Blockieren eines Empfängers der beiden Transceiver durch ein leistungsbezogenes Übersteuern hervorgerufen werden kann, ist es auch denkbar, dass die Empfindlichkeit des Empfängers des empfangenden Transceivers durch eine zeitgleiche Sende-Aktivität des anderen Transceivers verschlechtert wird. Wird das Bestehen einer Bluetooth-Verbindung nach dem AFH-Verfahren vorausgesetzt, wird eine Störung durch Spektralanteile innerhalb der Sendebandbreite des gesendeten Signals auf den empfangenden Transceivers im Allgemeinen verhindert. Eine Reduktion der Empfindlichkeit des Empfängers hinsichtlich des empfangenden Transceivers ist dennoch zu erwarten, da das Sendespektrum merkliche Signalanteile außerhalb der Sendebandbreite, d. h. in den Seitenbändern, aufweist. Diese Signalanteile des von dem sendenden Transceiver, beispielsweise dem WLAN-Transceiver, ausgestrahlten Signals stören als Rauschsignal den Empfang des empfangenden Transceivers.

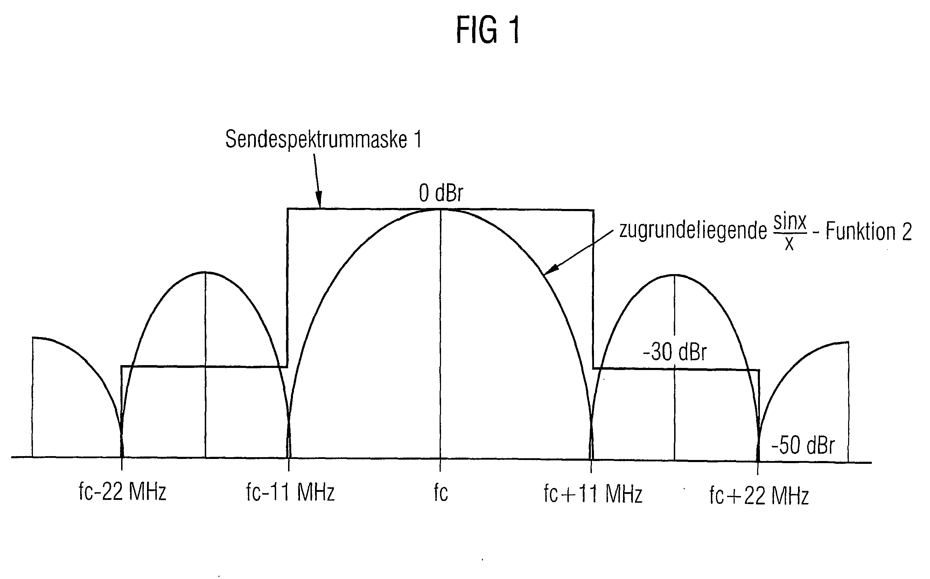

Fig. 1 zeigt den im IEEE-802.11-Standard spezifizierten Verlauf der Sendespektrummaske 1 und den Verlauf einer zugrunde liegenden sinx/x-Funktion 2. Die Angaben zur Sendespektrummaske sind dem IEEE-802.11-Spezifikations-Dokument "ANSI/IEEE Std 802.11", 1999 Edition, Kapitel 15.4.7.4, Seiten 218 und 219, entnommen. Dabei wird für die spektrale Verteilung des gesendeten Signals, insbesondere im Bereich der Seitenbänder, gefordert, dass der Spektralanteil innerhalb der Frequenzbereiche fc - 22 MHz < f < fc - 11 MHz und fc + 11 MHz < f < fc + 22 MHz - also außerhalb der Sendebandbreite von fc - 11 MHz < f < fc + 11 MHz - den Wert von -30 dBr nicht überschreiten darf. Dabei steht die Größe dBr für die Angabe "dB relativ zu dem Maximalwert der zugrunde liegenden sinx/x-Funktion". Ferner wird gefordert, dass der Spektralanteil innerhalb der Frequenzbereiche f < fc - 22 MHz und f > fc + 22 MHz den Wert von -50 dBr nicht überschreiten darf. Hierbei beschreibt die Größe fc die Kanalmittenfrequenz. Mit Hilfe der Sendespektrummaske 1 aus Fig. 1 kann abhängig vom Abstand zwischen der Bluetooth-Kanalmittenfrequenz und der WLAN-Kanalmittenfrequenz der Stör-Pegel des sendenden WLAN-Transceivers auf den empfangenden Bluetooth-Transceiver bestimmt werden. Der absolute Stör-Pegel am Empfänger des Bluetooth-Transceivers ist darüber hinaus abhängig von der Antennenisolation zwischen den beiden Antennen und der Ausgangsleistung des WLAN-Transceivers. Liegt der Stör-Pegel im Frequenzbereich des Nutzfrequenzbands des Bluetooth-Empfängers oberhalb einer minimalen Empfangsempfindlichkeit P_{MIN} (für Bluetooth gilt P_{MIN,BT} = - 70 dBm), führt dies zu einer Einschränkung des Bluetooth-Empfängers, insbesondere zu einer Reduzierung des möglichen Verbindungsradius der Bluetooth-Verbindung. Um dies zu verhindern, sollten in einem solchen Fall die Funk-Aktivitäten der beiden Transceiver koordiniert werden.

Liegt eine derartige Beeinträchtigung der Empfangsempfindlichkeit durch störende Seitenbänder vor, so werden eine Vielzahl von Bluetooth-Kanälen oder gar alle Bluetooth-Kanäle als "bad" klassifiziert. Daher kann als Indikation für das Vorliegen einer Beeinträchtigung der Empfangsempfindlichkeit des Bluetooth-Transceivers auch die Anzahl der als "good" oder "bad" klassifizierten Kanäle herangezogen werden, insbesondere ob die Anzahl N der als "good" klassifizierten Kanäle geringer als die geforderte minimale Anzahl N_{MIN} ist. Alternativ kann als Indikation für das Vorliegen einer Beeinträchtigung der Empfangsempfindlichkeit das Überschreiten einer bestimmten Bit- und/oder Paketfehlerrate verwendet werden. Für den Fall, dass der Sender des Bluetooth-Transceivers den Empfänger des WLAN-Transceivers stört, kann als Indikation für das Vorliegen einer Beeinträchtigung der Empfangsempfindlichkeit des WLAN-Transceivers das Überschreiten einer bestimmten Bit- und/oder Paketfehlerrate verwendet werden.

Dass eine Beeinträchtigung der Empfangsempfindlichkeit des Bluetooth-Transceivers durch die gleichzeitige Sende-Aktivität des WLAN-Transceivers im Allgemeinen nicht zwingend ist, so dass die Koordination der Funk-Aktivitäten in diesem Fall deaktiviert werden kann, verdeutlicht folgendes Rechenbeispiel:

Ausgehend von einer Sendeleistung des WLAN-Transceivers von 15 dBm und einer Antennenisolation von 30 dB bestimmt sich die vom WLAN-Transceiver hervorgerufene Störleistung am Bluetooth-Empfänger in dem Frequenzbereich fc - 22 MHz < f < fc + 22 MHz, mit Kanalmittenfrequenz fc des WLAN-Transceivers, zu -65 dBm. Aufgrund der unterschiedlichen Frequenzbandbreiten eines Bluetooth- und eines WLAN-Kanals muss zusätzlich ein Bandbreitekorrekturfaktor von ungefähr 10 dB berücksichtigt werden, so dass sich die effektive vom WLAN-Transceiver hervorgerufene Störleistung am Bluetooth-Empfänger zu -75 dBm bestimmt. Dieser Stör-Pegel ist 5 dB geringer als die im Bluetooth-Standard spezifizierte minimale Empfangsempfindlichkeit von P_{MIN,BT} = -70 dBm, so dass unter diesen Randbedingungen eine merkliche Beeinträchtigung der Empfangsempfindlichkeit nicht zu erwarten ist und die im Bluetooth-Standard geforderte Verbindungsdistanz von 10 m eingehalten werden kann. Wird neben einer Störung der beiden Transceiver untereinander auch eine Störung durch weitere externe Störquellen außerhalb des die beiden Transceiver umfassenden Geräts, wie zum Beispiel einem weiteren WLAN-Gerät, berücksichtigt, so können diese Störquellen dazu führen, dass eine Koordination der Funk-Aktivitäten der beiden Transceiver aktiviert werden sollte, obwohl der Störeinfluss des einen Transceivers auf den anderen Transceiver allein die Aktivierung nicht rechtfertigt. In diesem Fall wird dennoch der Gesamt-Stör-Pegel für den empfangenden Transceiver durch Aktivierung der Koordination der Funk-Aktivitäten merklich gesenkt. Der zusätzliche Einfluss weiterer externer Störquellen macht sich beispielsweise auf Seiten des Bluetooth-Transceivers dadurch bemerkbar, dass die Anzahl N der mit dem Attribut "good" spezifizierten Bluetooth-Kanäle unter die geforderte Anzahl N_{MIN} fällt, während die Anzahl der mit dem Attribut "good" spezifizierten Bluetooth-Kanäle ohne weitere externe Störquellen oberhalb der geforderten Anzahl N_{MIN} liegt. Ist aufgrund der zusätzlichen externen Störquellen die Anzahl N der mit dem Attribut "good" spezifizierten Bluetooth-Kanäle kleiner als die geforderte Anzahl N_{MIN}, kann die Koordination der Funk-Aktivitäten eingeschaltet werden. Nimmt die Anzahl N der mit dem Attribut "good" spezifizierten Bluetooth-Kanäle wieder zu, wenn die Störquellen ausgeschaltet oder aus der Umgebung entfernt wurden, können die Koexistenzmaßnahmen wieder deaktiviert werden.

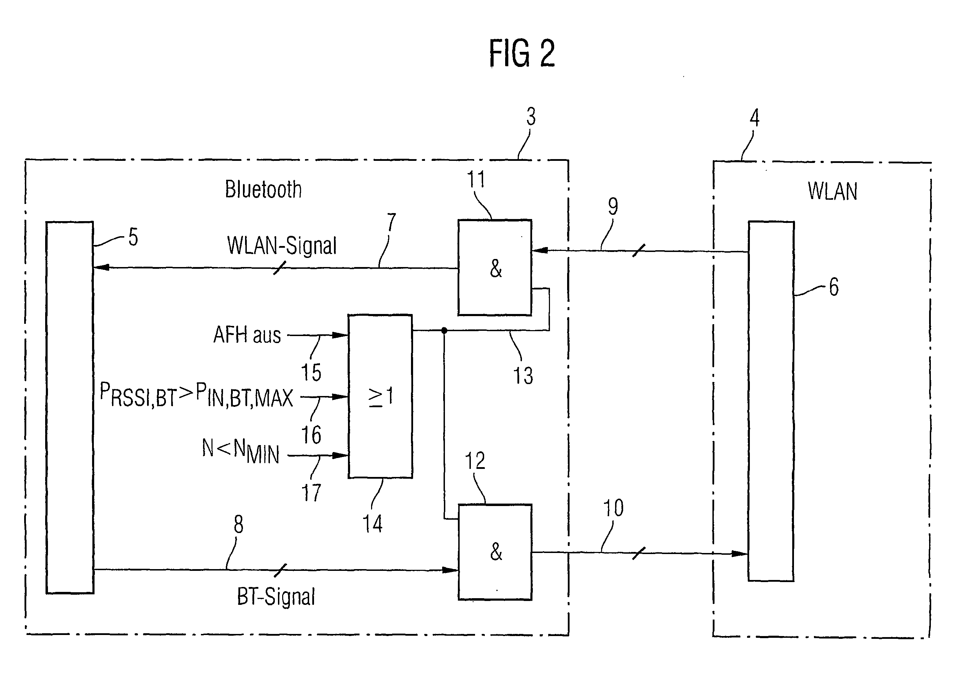

In Fig. 2 ist ein Blockdiagramm eines ersten Ausführungsbeispiels der erfindungsgemäßen Aktivierung und Deaktivierung der Koordination der Funk-Aktivitäten dargestellt. Hierbei sind der Bluetooth-Transceiver 3 und der WLAN-Transceiver 4, wie bereits oben erwähnt, in dem gemeinsamen Gerät (nicht dargestellt) untergebracht. Zwischen beiden Transceivern werden zur Koordination der Funk-Aktivitäten Koexistenzsignale 9 und 10 über leitungsgebundene Schnittstellen ausgetauscht. Dabei sind in dem Bluetooth-Transceiver 3 und dem WLAN-Transceiver 4 ein Steuer-Mittel 5 bzw. ein Steuer-Mittel 6 vorgesehen. Das Steuer-Mittel 6 liest das Koexistenzsignal 10 des Bluetooth-Transceivers 3 ein, welches der zeitlichen Koordination der Funk-Aktivität des WLAN-Transceivers 4 dient, wobei das Steuer-Mittel 6 den Zeitpunkt der Sende- oder Empfangstätigkeit des WLAN-Transceivers in Abhängigkeit des Koexistenzsignals 10 bestimmt. Umgekehrt gibt das Steuer-Mittel 6 ein Koexistenzsignal 9 aus, welches der zeitlichen Koordination der Funk-Aktivität des Bluetooth-Transceivers 3 dient. Ein Koexistenzsignal 9 bzw. 10 gibt beispielsweise an, ob der zugehörige Transceiver momentan ein Funksignal, beispielsweise ein Datenpaket, sendet oder unmittelbar beabsichtigt, ein Funksignal zu senden. Alternativ oder zusätzlich ist es denkbar, dass ein derartiges Signal 9 bzw. 10 angibt, ob der zugehörige Transceiver momentan ein Funksignal empfängt. Das von dem Steuer-Mittel 6 ausgegebene Koexistenzsignal 9 liegt am Eingang eines Schalt-Mittels 11 (hier als AND-Gatter dargestellt) an. In Abhängigkeit eines Steuersignals 13, welches dem Schalt-Mittel 11 zugeführt wird, wird das Signal 9 entweder auf den Ausgang des Schalt-Mittels 11 geführt oder vom Ausgang des Schalt-Mittels 11 entkoppelt. Das Ausgangssignal 7 des Schalt-Mittels 11 wird in das Steuer-Mittel 5 eingelesen. In analoger Weise wird das vom Steuer-Mittel 5 ausgegebene Koexistenzsignal 8 auf den Eingang eines Schalt-Mittels 12 geführt, dessen Ausgangssignal dem Signal 10 entspricht. In Abhängigkeit des Steuersignals 13 wird das Signal 8 entweder auf den Ausgang des Schalt-Mittels 12 geführt oder vom Ausgang des Schalt-Mittels 12 entkoppelt. Hierbei sind die Schalt-Mittel 11 und 12 im Bluetooth-Transceiver 3 angeordnet. Das Steuersignal 13 der Schalt-Mittel 11 und 12 wird aus intern im Bluetooth-Transceiver verfügbaren Größen erzeugt. Dabei wird das Steuersignal 13 so gesetzt, dass die Schalt-Mittel 11 und 12 einen Kurzschluss darstellen, wenn eine der folgenden Schalt-Bedingungen erfüllt ist:
a) es liegt keine AFH-Verbindung vor (AFH aus);
b) der Signal-Pegel P_{RSSI,BT} ist größer als der Schwellwert P_{IN,BT,MAX} des Signal-Pegels, ab dem die Linearität des Empfängers des empfangenden Bluetooth-Transceivers nicht mehr gewährleistet werden kann; oder
c) die Anzahl der als "good" klassifizierten Bluetooth-Kanäle N ist geringer als die minimal erforderliche Anzahl N_{MIN}.

Diese logische Verknüpfung wird durch das OR-Gatter 14 versinnbildlicht, dessen Eingangsgrößen 15 bis 17 Boolesche Größen gemäß der Bedingungen a), b) bzw. c) darstellen. Liegt ein Kurzschluss vor, so wird die Koordination der Funk-Aktivität des jeweils angesteuerten Transceivers aktiviert, liegt ein Leerlauf vor, wird die Koordination der Funk-Aktivität des jeweils angesteuerten Transceivers deaktiviert. Die Implementierung des in Fig. 2 dargestellten Ausführungsbeispiels kann mit logischen Gattern oder auch in logisch adäquat arbeitender Software realisiert werden.

Dem in Fig. 2 dargestellten Ausführungsbeispiel liegt die Idee zugrunde, das Aktivieren und Deaktivieren der Koexistenzmaßnahmen generell von dem Transceiver mit der geringeren typischen Ausgangsleistung, d. h. dem Bluetooth-Transceiver 3, zu steuern, da der Transceiver mit der geringeren Ausgangsleistung und damit auch geringeren Empfangsleistung stärker durch den jeweils anderen Transceiver gestört wird. Typischerweise liegt die Ausgangsleistung des WLAN-Transceivers 4 bei 20 dBm, während die des Bluetooth-Transceivers 3 bei 0 dBm liegt. Hierbei werden sowohl die für das Erfordernis des Aktivierens oder Deaktivierens der Koexistenzmaßnahmen charakteristischen Größen wie P_{RSSI} und N im Bluetooth-Transceiver ermittelt oder abgefragt, als auch das Aktivieren oder Deaktivieren der Koordination der Funk-Aktivität des Bluetooth-Transceivers und auch des WLAN-Transceivers durch die Schalt-Mittel 11 bzw. 12 im Bluetooth-Transceiver durchgeführt. Der Bluetooth-Transceiver 3 entscheidet also, ob eine zeitliche Koordination generell notwendig ist. Ist eine der Schalt-Bedingungen a) bis c) erfüllt, werden Koexistenzsignale 9 und 10 zwischen den Steuer-Mitteln 5 und 6 ausgetauscht. Für den Fall, dass keine der Schalt-Bedingungen a) bis c) erfüllt ist, werden die von den Steuer-Mitteln 5 und 6 ausgegebenen Koexistenzsignale 8 bzw. 9 von dem jeweils anderen Steuer-Mittel 6 bzw. 5 ignoriert.

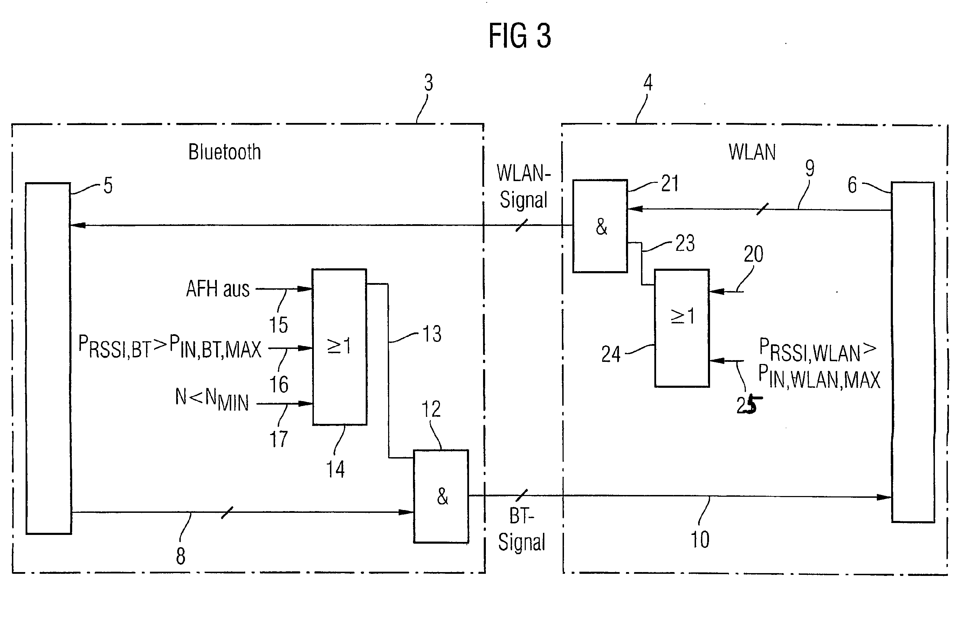

In Fig. 3 ist ein Blockdiagramm eines zweiten Ausführungsbeispiels der erfindungsgemäßen Aktivierung und Deaktivierung der Koordination der Funk-Aktivitäten dargestellt. Die mit gleichnamigen Bezugszeichen versehenen Strukturen gemäß Fig. 2 und Fig. 3 entsprechen einander. Im Gegensatz zu dem in Fig. 2 dargestellten Ausführungsbeispiel wird in jedem der Transceiver 3 und 4 entschieden, ob eine Koordination der Funk-Aktivität des jeweils anderen Transceivers 4 bzw. 3 notwendig ist. Zur Entscheidung werden jeweils Transceiverinterne Größen verwendet, welche beiden Transceivern zur Verfügung stehen. Daher dient das Steuer-Signal 13 im Gegensatz zu dem Ausführungsbeispiel aus Fig. 2 nur der Steuerung des Schalt-Mittels 12, wodurch lediglich die Koordination der Funk-Aktivität des WLAN-Transceivers 4 in Abhängigkeit Bluetooth-interner Größen aktiviert oder deaktiviert wird. Die Aktivierung oder Deaktivierung der Koordination der Funk-Aktivität des Bluetooth-Transceivers 3 wird in Abhängigkeit WLAN-interner Größen durchgeführt. Das Ausgangssignal 9 des dem WLAN-Transceiver 4 zugeordneten Steuer-Mittels 6 liegt am Eingang eines Schalt-Mittels 21, welches in seiner Funktion dem Schalt-Mittel 11 aus Fig. 2 entspricht. Im Gegensatz zum Schalt-Mittel 11 aus Fig. 2 wird das Schalt-Mittel 21 in Abhängigkeit eines Steuersignals 23 gesteuert. Darüber hinaus ist es dem WLAN-Transceiver 4 zugeordnet. Dabei wird das Steuersignal 23 so gesetzt, dass das Schalt-Mittel 21 einen Kurzschluss darstellt, wenn der im WLAN-Transceiver empfangene Signal-Pegel P_{RSSI,WLAN} größer als der Schwellwert P_{IN,WLAN,MAX} des Signal-Pegels ist, ab dem die Linearität des Empfängers des WLAN-Transceivers nicht mehr gewährleistet werden kann. Neben der an diese Bedingung geknüpften Booleschen Größe 25 können noch ein oder mehrere weitere Boolesche Größen 20 vorgesehen werden, die auf den speziellen Eigenschaften des IEEE-802.11k-Standards basieren. Insbesondere der nach dem IEEE-802.11k-Standard intern ermittelte Signal-Pegel kann hierfür mit einem Schwellwert verglichen werden und das Vergleichsergebnis abgefragt werden.

Wird einer der Empfänger der Transceiver 3 oder 4 durch die Sende-Aktivität des jeweils anderen Transceivers 4 bzw. 3 beeinträchtigt, so versucht dieser durch ein Koexistenzsignal die Funk-Aktivität des jeweils anderen Transceivers 4 bzw. 3 zu koordinieren. Findet eine derartige Beeinträchtigung nicht statt, wird die Funk-Aktivität des jeweils anderen Transceivers 4 bzw. 3 nicht koordiniert. Es erfolgt zwar eine Koordination der eigenen Funk-Aktivitäten im Fall eines wirksam eingelesenen Koexistenzsignals, aber keine wirksame Ausgabe eines Koexistenzsignals, da das jeweilige Schalt-Mittel 12 bzw. 21 den Informationsaustausch unterbindet. Eine derartiges Szenario kann sich beispielsweise unter den Randbedingungen des vorstehend beschriebenen Rechenbeispiels ergeben. Ohne eine weitere externe Störquelle wird die Empfangsempfindlichkeit des Bluetooth-Transceivers nicht beeinträchtigt. Die Funk-Aktivität des WLAN-Transceivers muss nicht koordiniert werden. Werden weitere externe Störquellen, beispielsweise ein weiteres externes WLAN-Gerät, angenommen, muss die Funk-Aktivität des WLAN-Transceivers möglicherweise koordiniert werden, um die geforderte Empfangsempfindlichkeit des Bluetooth-Transceivers 3 zu gewährleisten. Aufgrund der geringeren Ausgangsleistung des Senders des Bluetooth-Transceivers 3 gegenüber dem WLAN-Transceiver 4 ist die Störung des WLAN-Transceivers 4 unwesentlich, so dass die Funk-Aktivität des Bluetooth-Transceivers 3 nicht koordiniert werden muss. Somit wird ermöglicht, Koexistenzsignale vom Bluetooth-Transceiver 3 an den WLAN-Transceiver 4 wirksam auszutauschen, um die Funk-Aktivität des WLAN-Transceivers 4 zeitlich zu beeinflussen, ohne dass die Funk-Aktivität des Bluetooth-Transceivers 3 beeinflusst wird. Es besteht damit die Möglichkeit eines uni-direktionalen Austausches von Koexistenzsignalen, wodurch nur die Funk-Aktivität eines Transceivers koordiniert wird. Der beschriebene Sachverhalt gilt auch in analoger Weise für eine Störung des WLAN-Transceivers 4. Ferner wird durch das in Fig. 3 dargestellte Ausführungsbeispiel ermöglicht, dass die Funk-Aktivitäten beider Transceiver 3 und 4 angepasst werden, wenn sich die Transceiver gegenseitig stören.

Es wäre im Sinne der Anmeldung denkbar, die in Fig. 2 und Fig. 3 dargestellte Zuordnung der Schalt-Mittel 11, 12 und 21 zu den jeweiligen Transceivern 3 und 4 zu ändern. Beispielsweise könnte das Schalt-Mittel 12 dem WLAN-Transceiver 4 zugeordnet werden. In diesem Fall müsste das Steuersignal 13 über die Schnittstelle zwischen Bluetooth-Transceiver 3 und WLAN-Transceiver 4 übertragen werden. In analoger Weise könnten auch die weiteren Schaltmittel 11 und 21 bei gleichzeitiger Übertragung der Steuersignale 13 bzw. 23 über die Schnittstelle im WLAN- bzw. Bluetooth-Transceiver angeordnet werden.

Die in Fig. 2 und Fig. 3 dargestellten Ausführungsbeispiele können auch auf den Fall bezogen werden, dass beide Transceiver 3, 4 oder Teile der beiden Transceiver in einem gemeinsamen Chip integriert sind. Ferner ist es auch denkbar, dass die Koexistenzsignale nicht direkt zwischen den Transceivern ausgetauscht werden. Dies ist insbesondere dann der Fall, wenn zwischen jedem Transceiver und einer gemeinsamen, die Koordination steuernden Einrichtung, z. B. Host, Koexistenzsignale übertragen werden.

## Patentansprüche

1. Verfahren zum Aktivieren oder Deaktivieren der Koordination der Funk-Aktivitäten einer ersten Mobilfunk-Sende- und/oder -Empfangseinrichtung (3) und einer zweiten Mobilfunk-Sende- und/oder -Empfangseinrichtung (4) in einem Szenario, in dem zeitgleiche Funk-Aktivitäten beider Sende- und/oder Empfangseinrichtungen Übertragungsstörungen verursachen können und in dem zur Koordination der Funk-Aktivitäten zwischen beiden Sende- und/oder Empfangseinrichtungen ein leitungsgebundener Informationsaustausch stattfindet, mit den Schritten:
a) Ermitteln eines Wertes mindestens einer charakteristischen Größe (P_{RSSI,BT,} N; 15 , 16, 17), welche für das Erfordernis der Koordination der Funk-Aktivität der ersten sende- und/oder Empfangseinrichtung und der Koordination der Funk-Aktivität der zweiten Sende- und/oder Empfangseinrichtung charakteristisch ist; und
b) Aktivieren oder Deaktivieren der Koordination der Funk-Aktivität der ersten Sende- und/oder Empfangseinrichtung und der Koordination der Funk-Aktivität der zweiten Sende- und/oder Empfangseinrichtung in Abhängigkeit von dem Wert der mindestens einen charakteristischen Größe, wobei
das Ermitteln des Werts der mindestens einen charakteristischen Größe (P_{RSSI,BT,} N; 15, 16, 17) und das Aktivieren und Deaktivieren der Koordination der Funk-Aktivität der ersten Sende- und/oder Empfangseinrichtung (3) und der Koordination der Funk-Aktivität der zweiten Sende- und/oder Empfangseinrichtung (4) seitens derjenigen (3) der beiden Sende- und/oder Empfangseinrichtungen (3, 4) durchgeführt wird, welche eine geringere typische Ausgangsleistung aufweist.

2. Verfahren zum Aktivieren oder Deaktivieren der Koordination der Funk-Aktivitäten einer ersten Mobilfunk-Sende- und/oder -Empfangseinrichtung (3) und einer zweiten Mobilfunk-Sende- und/oder -Empfangseinrichtung (4) in einem Szenario, in dem zeitgleiche Funk-Aktivitäten beider Sende- und/oder Empfangseinrichtungen Übertragungsstörungen verursachen können und in dem zur Koordination der Funk-Aktivitäten zwischen beiden Sende- und/oder Empfangseinrichtungen ein leitungsgebundener Informationsaustausch stattfindet, mit den Schritten;
a1) Ermitteln eines Wertes für mindestens eine charakteristische Größe (20, 25) seitens der zweiten Sende- und/oder Empfangseinrichtung (4), welche für das Erfordernis der Koordination der Funk-Aktivität der ersten Sende- und/oder Empfangseinrichtung charakteristisch ist;
a2) Ermitteln eines Wertes für mindestens eine zweite charakteristische Größe (P_{RSSI}, N; 15, 16, 17) seitens der ersten Sende- und/oder Empfangseinrichtung (3), welche für das Erfordernis der Koordination der Funk-Aktivität der zweiten Sende- und/oder Empfangseinrichtung (4) charakteristisch ist;
b1) Aktivieren oder Deaktivieren der Koordination der Funk-Aktivität der ersten Sende- und/oder Empfangseinrichtung (3) in Abhängigkeit von dem in Verfahrensschritt a1) ermittelten Wert seitens der zweiten Sende- und/oder Empfangseinrichtung (4) ; und
b2) Aktivieren oder Deaktivieren der Koordination der Funk-Aktivität der zweiten Sende- und/oder Empfangseinrichtung (4) in Abhängigkeit von dem in Verfahrensschritt a2) ermittelten Wert seitens der ersten Sende- und/oder Empfangseinrichtung (3).

3. Verfahren nach Anspruch 1 oder 2,
**dadurch gekennzeichnet,**
**dass** die mindestens eine charakteristische Größe mindestens eine der nachfolgend genannten Größen ist:
- ein Eingangssignal-Pegel (P_{RSSI,BT,} P_{RSSI,WLAN}) oder
- eine Datenfehlerrate, insbesondere eine Bit- und/oder eine Paketfehlerrate.

4. verfahren nach einem der Ansprüche 1 bis 3,
**dadurch gekennzeichnet,**
**dass** eine (3) der beiden Sende- und/oder Empfangseinrichtungen (3, 4) nach dem Bluetooth-Standard arbeitet.

5. Verfahren nach Anspruch 4,
**dadurch gekennzeichnet,**
**dass** eine (3) der beiden Sende- und/oder Empfangseinrichtungen (3, 4) nach dem Bluetooth-Standard Version 1.2 oder höher arbeitet und die seitens dieser Sende- und/oder Empfangseinrichtung (3) ermittelte charakteristische Größe mindestens eine der nachfolgend genannten Größen ist:
- eine Angabe (15), ob eine Funkverbindung nach dem Bluetooth-spezifischen Adaptive-Frequency-Hopping-Verfahren vorliegt oder nicht, oder
- eine Anzahl (N) der als gut oder schlecht klassifizierten Kanäle oder Kanalpaare bei einer Funkverbindung nach dem Bluetooth-spezifischen Adaptive-Frequency-Hopping-Verfahren.

6. Verfahren nach einem der vorhergehenden Ansprüche,
**dadurch gekennzeichnet,**
**dass** eine (4) der beiden Sende- und/oder Empfangseinrichtungen (3, 4) nach dem IEEE-802.11-Standard arbeitet.

7. Verfahren nach einem der Ansprüche 1 bis 6,
**dadurch gekennzeichnet,**
**dass** die Koordination der Funk-Aktivitäten verhindert, dass seitens beider Sende- und/oder Empfangseinrichtungen (3, 4) zeitgleich eine Funk-Aktivität stattfindet, insbesondere dass
- beide Sende- und/oder Empfangseinrichtungen zeitgleich senden oder
- beide Sende- und/oder Empfangseinrichtungen zeitgleich empfangen oder
- eine Sende- und/oder Empfangseinrichtung sendet, während die andere Sende- und/oder Empfangseinrichtung zeitgleich empfängt.

8. Vorrichtung zum Aktivieren oder Deaktivieren der Koordination der Funk-Aktivitäten einer ersten Mobilfunk-Sende- und/oder -Empfangseinrichtung (3) und einer zweiten Mobilfunk-Sende- und/oder -Empfangseinrichtung (4) in einem Szenario, in dem zeitgleiche Funk-Aktivitäten beider Sende- und/oder Empfangseinrichtungen Übertragungsstörungen verursachen können und in dem zur Koordination der Funk-Aktivitäten zwischen beiden Sende- und/oder Empfangseinrichtungen ein leitungsgebundener Informationsaustausch stattfindet, mit
einem ersten Bestimmungs-Mittel (24) zum Ermitteln mindestens einer ersten charakteristischen Größe (20, 25; P_{RSSI}), welche für das Erfordernis der Koordination der Funk-Aktivität der ersten Sende- und/oder Empfangseinrichtung (3) charakteristisch ist,
einem zweiten Bestimmungs-Mittel (14) zum Ermitteln mindestens einer zweiten charakteristischen Größe (P_{RSSI,BT,} N; 15, 16, 17), welche für das Erfordernis der Koordination der Funk-Aktivität der zweiten Sende- und/oder Empfangseinrichtung (4) charakteristisch ist,
einem ersten Schalt-Mittel (12) zum Aktivieren oder Deaktivieren der Koordination der Funk-Aktivität der zweiten Sende- und/oder Empfangseinrichtung (4) in Abhängigkeit von der mindestens einen zweiten charakteristischen Größe, und
einem zweiten Schalt-Mittel (21) zum Aktivieren oder Deaktivieren der Koordination der Funk-Aktivität der ersten Sende- und/oder Empfangseinrichtung (3) in Abhängigkeit von der mindestens einen ersten charakteristischen Größe, wobei
das zweite Bestimmungs-Mittel (14) und das erste Schalt-Mittel (12) der ersten Sende- und/oder Empfangseinrichtung (3) und das erste Bestimmungs-Mittel (24) und das zweite Schalt-Mittel (21) der zweiten Sende- und/oder Empfangseinrichtung (4) zugeordnet sind.

9. Vorrichtung zum Aktivieren oder Deaktivieren der Koordination der Funk-Aktivitäten einer ersten Mobilfunk-Sende- und/oder -Empfangseinrichtung (3) und einer zweiten Mobilfunk-Sende- und/oder -Empfangseinrichtung (4) in einem Szenario, in dem zeitgleiche Funk-Aktivitäten beider Sende- und/oder Empfangseinrichtungen Übertragungsstörungen verursachen können und in dem zur Koordination zwischen beiden Sende- und/oder Empfangseinrichtungen ein leitungsgebundener Informationsaustausch stattfindet, mit
mindestens einem Bestimmungs-Mittel (14) zum Ermitteln mindestens einer charakteristischen Größe (P_{RSSI,BT,} N; 15, 16, 17), welche für das Erfordernis der Koordination der Funk-Aktivität der ersten Sende- und/oder Empfangseinrichtung und der Koordination der Funk-Aktivität der zweiten Sende- und/oder Empfangseinrichtung charakteristisch ist,
einem ersten Schalt-Nlittel (12) zum Aktivieren oder Deaktivieren der Koordination der Funk-Aktivität der zweiten Sende- und/oder Empfangseinrichtung (4) in Abhängigkeit von der mindestens einen charakteristischen Größe, und
einem zweiten Schalt-Mittel (11) zum Aktivieren oder Deaktivieren der Koordination der Funk-Aktivität der ersten Sende- und/oder Empfangseinrichtung (3) in Abhängigkeit von der mindestens einen charakteristischen Größe, wobei
das Bestimmungs-Mittel (14), das erste Schalt-Mittel (12) und das zweite Schall-Mittel (11) der Sende- und/oder Empfangseinrichtung (3) mit einer geringeren typischen Ausgangsleistung zugeordnet sind.

10. Vorrichtung nach einem der Anspruche 8 oder 9,
**dadurch gekennzeichnet,**
**dass** die mindestens eine charakteristische Größe mindestens eine der nachfolgenden Größen ist:
- ein Eingangssignal-Pegel (P_{RSST,BT,} P_{RSSI,WLAN}) oder
- eine Datenfehlerrate, insbesondere eine Bit- und/oder eine Paketfehlerrate.

11. Vorrichtung nach einem der Ansprüche 8 bis 10,
**dadurch gekennzeichnet,**
**dass** eine (3) der beiden Sende- und/oder Empfangseinrichtungen eine nach dem Bluetooth-Standard arbeitende Sende- und/oder Empfangseinrichtung ist.

12. Vorrichtung nach Anspruch 11,
**dadurch gekennzeichnet,**
**dass** eine (3) der beiden Sende- und/oder Empfangseinrichtungen eine nach dem Bluetooth-Standard Version 1.2 oder höher arbeitende Sende- und/oder Empfangseinrichtung ist und die seitens dieser Sende- und/oder Empfangseinrichtung ermittelte charakteristische Größe mindestens eine der nachfolgenden Größen ist:
- eine Angabe (15), ob eine Funkverbindung nach dem Bluetooth-spezifischen Adaptive-Frequency-Hopping-Verfahren vorliegt oder nicht, oder
- eine Anzahl (N) der als gut oder schlecht klassifizierten Kanäle oder Kanalpaare bei einer Funkverbindung nach dem Bluetooth-spezifischen Adaptive-Frequency-Hopping-Verfahren.

13. Vorrichtung nach einem der Ansprüche 8 bis 12,
**dadurch gekennzeichnet,**
**dass** eine (4) der beiden Sende- und/oder Empfangseinrichtungen eine nach dem IEEE-802.11-Standard arbeitende Sende- und/oder Empfangseinrichtung ist.

14. Vorrichtung nach einem der Ansprüche 8 bis 13,
**dadurch gekennzeichnet,**
**dass** jeweils das oder die Schalt-Mittel (11, 12, 21) zum Unterbinden des zur Koordination notwendigen Informationsaustausches ausgelegt sind.

## Claims

1. Method for activation or deactivation of the coordination of the radio activities of a first mobile radio transmitting and/or receiving device (3) and of a second mobile radio transmitting and/or receiving device (4), in a scenario in which simultaneous radio activities of both transmitting and/or receiving devices can cause transmission interference, and in which cable-based information interchange takes place in order to coordinate the radio activities between the two transmitting and/or receiving devices, having the following steps:
a) determination of a value of at least one characteristic variable (P_{RSSI,BT}, N; 15, 16, 17) which is characteristic of the requirement for coordination of the radio activity of the first transmitting and/or receiving device and/or for the coordination of the radio activity of the second transmitting and/or receiving device; and
b) activation or deactivation of the coordination of the radio activity of the first transmitting and/or receiving device and the coordination of the radio activity of the second transmitting and/or receiving device as a function of the value of the at least one characteristic variable, in which
the determination of the value of the at least one characteristic variable (P_{RSSI, BT,} N; 15, 16, 17) and the activation and deactivation, the coordination of the radio activity of the first transmitting and/or receiving device (3), and the coordination of the radio activity of the second transmitting and/or receiving device (4) are carried out by that (3) of the two transmitting and/or receiving devices (3, 4) which has a lower typical output power.

2. Method for activation or deactivation of the coordination of the radio activities of a first mobile radio transmitting and/or receiving device (3) and of a second mobile radio transmitting and/or receiving device (4), in a scenario in which simultaneous radio activities of both transmitting and/or receiving devices can cause transmission interference, and in which cable-based information interchange takes place in order to coordinate the radio activities between the two transmitting and/or receiving devices, having the following steps:
a1) determination of a value for at least one characteristic variable (20, 25) by the second transmitting and/or receiving device (4), which is characteristic of the requirement for coordination of the radio activity of the first transmitting and/or receiving device;
a2) determination of a value for at least one second characteristic variable (P_{RSSI}, N; 15, 16, 17) by the first transmitting and/or receiving device (3), which is characteristic of the requirement for coordination of the radio activity of the second transmitting and/or receiving device (4);
b1) activation or deactivation of the coordination of the radio activity of the first transmitting and/or receiving device (3) as a function of the value determined in method step a1), by the second transmitting and/or receiving device (4); and
b2) activation or deactivation of the coordination of the radio activity of the second transmitting and/or receiving device (4) as a function of the value determined in method step a2), by the first transmitting and/or receiving device (3).

3. Method according to Claim 1 or 2,
**characterized**
**in that** at least one characteristic variable is at least one of the variables mentioned below:
- an input-signal level (P_{RSSI,BT}, P_{RSSI,WLAN}) or
- a data error rate, in particular a bit error rate and/or a packet error rate.

4. Method according to one of Claims 1 to 3,
**characterized**
**in that** one (3) of the two transmitting and/or receiving devices (3, 4) operates on the basis of the Bluetooth Standard.

5. Method according to Claim 4,
**characterized**
**in that** one (3) of the two transmitting and/or receiving devices (3, 4) operates on the basis of Bluetooth Standard Version 1.2 or higher, and the characteristic variable which is determined by this transmitting and/or receiving device (3) is at least one of the variables mentioned in the following text:
- a statement (15) as to whether or not a radio link is present based on the Bluetooth-specific adaptive frequency hopping method, or
- a number (N) of the channels or channel pairs which are classified as being good or poor in a radio link based on the Bluetooth-specific adaptive frequency hopping method.

6. Method according to one of the preceding claims,
**characterized**
**in that** one (4) of the two transmitting and/or receiving devices (3, 4) operates on the basis of the IEEE-802.11 Standard.

7. Method according to one of Claims 1 to 6,
**characterized**
**in that** the coordination of the radio activities prevents both transmitting and/or receiving devices (3, 4) from carrying out a radio activity at the same time, in particular by
- both transmitting and/or receiving devices transmitting at the same time, or
- both transmitting and/or receiving devices receiving at the same time, or
- one transmitting and/or receiving device transmitting while the other transmitting and/or receiving device is receiving at the same time.

8. Apparatus for activation or deactivation of the coordination of the radio activities of a first mobile radio transmitting and/or receiving device (3) and of a second mobile radio transmitting and/or receiving device (4), in a scenario in which simultaneous radio activities of both transmitting and/or receiving devices can cause transmission interference, and in which cable-based information interchange takes place in order to coordinate the radio activities between the two transmitting and/or receiving devices, having
a first determination means (24) for determination of at least one first characteristic variable (20, 25; P_{RSSI}), which is characteristic of the requirement for coordination of the radio activity of the first transmitting and/or receiving device (3),
a second determination means (14) for determination of at least one second characteristic variable (P_{RSSI,BT}, N; 15, 16, 17) which is characteristic of the requirement for coordination of the radio activity of the second transmitting and/or receiving device (4),
a first switching means (12) for activation or deactivation of the coordination of the radio activity of the second transmitting and/or receiving device (4) as a function of the at least one second characteristic variable, and
a second switching means (21) for activation or deactivation of the coordination of the radio activity of the first transmitting and/or receiving device (3) as a function of the at least one first characteristic variable, in which
the second determination means (14) and the first switching means (12) are associated with the first transmitting and/or receiving device (3), and the first determination means (24) and the second switching means (21) are associated with the second transmitting and/or receiving device (4).

9. Apparatus for activation or deactivation of the coordination of the radio activities of a first mobile radio transmitting and/or receiving device (3) and of a second mobile radio transmitting and/or receiving device (4), in a scenario in which simultaneous radio activities of both transmitting and/or receiving devices can cause transmission interference, and in which cable-based information interchange takes place in order to coordinate between the two transmitting and/or receiving devices, having
at least one determination means (14) for determination of a characteristic variable (P_{RSSI,BT,} N; 15, 16, 17), which is characteristic of the requirement for coordination of the radio activity of the first transmitting and/or receiving device, and for coordination of the radio activity of the second transmitting and/or receiving device,
a first switching means (12) for activation or deactivation of the coordination of the radio activity of the second transmitting and/or receiving device (4) as a function of the at least one second characteristic variable, and
a second switching means (11) for activation or deactivation of the coordination of the radio activity of the first transmitting and/or receiving device (3) as a function of the at least one characteristic variable, in which
the determination means (14), the first switching means (12) and the second switching means (11) are associated with the transmitting and/or receiving device (3) with a lower typical output power.

10. Apparatus according to one of Claims 8 or 9,
**characterized**
**in that** the at least one characteristic variable is at least one of the following variables:
- an input-signal level (P_{RSSI,BT,} P_{RSSI,WLAN}) or
- a data error rate, in particular a bit error rate and/or a packet error rate.

11. Apparatus according to one of Claims 8 to 10,
**characterized**
**in that** one (3) of the two transmitting and/or receiving devices is a transmitting and/or receiving device which operates on the basis of the Bluetooth Standard.

12. Apparatus according to Claim 11,
**characterized**
**in that** one (3) of the two transmitting and/or receiving devices is a transmitting and/or receiving device which operates on the basis of the Bluetooth Standard Version 1.2 or higher, and the characteristic variable which is determined by this transmitting and/or receiving device is at least one of the following variables:
- a statement (15) as to whether or not a radio link is present based on the Bluetooth-specific adaptive frequency hopping method, or
- a number (N) of the channels or channel pairs which are classified as being good or poor in a radio link based on the Bluetooth-specific adaptive frequency hopping method.

13. Apparatus according to one of Claims 8 to 12,
**characterized**
**in that** one (4) of the two transmitting and/or receiving devices operates on the basis of the IEEE-802.11 Standard.

14. Apparatus according to one of Claims 8 to 13,
**characterized**
**in that** the switching means (11, 12, 21) is or are in each case designed to suppress the information interchange which is required for coordination.

## Revendications

1. Procédé d'activation et de désactivation de la coordination des activités de radiocommunication d'un premier dispositif (3) de téléphonie mobile d'émission et/ou de réception et d'un deuxième dispositif (4) de téléphonie mobile d'émission et/ou de réception dans un scénario dans lequel des activités de télécommunication simultanée des deux dispositifs d'émission et/du de réception peuvent provoquer des dysfonctionnements de transmission et dans lequel, pour la coordination des activités de télécommunication entre les deux dispositifs d'émission et/ou de réception, a lieu un échange d'information par ligne, dans lequel
a) on détermine une valeur d'au moins une grandeur (P_{RSSI}, _{BT}, N; 15, 16, 17) caractéristique qui est caractéristique du besoin de coordination de l'activité de télécommunication du premier dispositif d'émission et/ou de réception et de la coordination de l'activité de télécommunication du deuxième dispositif d'émission et/ou de réception; et
b) on active ou on désactive la coordination de l'activité de télécommunication du premier dispositif d'émission et/ou de réception et de la coordination de l'activité de télécommunication du deuxième dispositif d'émission et/ou de réception en fonction de la valeur de la au moins une grandeur caractéristique, dans lequel
on effectue la détermination de la valeur de la au moins une grandeur (P_{RSSI, BT}, N; 15, 1,6, 17) caractéristique et l'activation et la désactivation de la coordination de l'activité de télécommunication du premier dispositif (3) d'émission et/ou de réception et de la coordination de l'activité de télécommunication du deuxième dispositif (4) d'émission et/ou de réception du côté de celui (3) des deux dispositifs (3, 4) d'émission et/ou de réception qui a une puissance de sortie typique plus petite.

2. Procédé d'activation et de désactivation de la coordination des activités de radiocommunication d'un premier dispositif (3) de téléphonie mobile d'émission et/ou de réception et d'un deuxième dispositif (4) de téléphonie mobile d'émission et/ou de réception dans un scénario dans lequel des activités de télécommunication simultanée des deux dispositifs d'émission et/ou de réception peuvent provoquer des dysfonctionnements de transmission et dans lequel, pour la coordination des activités de télécommunication entre les deux dispositifs d'émission et/ou de réception, a lieu un échange d'information par ligne, dans lequel
a1) on détermine une valeur d'au moins une grandeur (20, 25) caractéristique du côté du deuxième dispositif (4) d'émission et/ou de réception qui est caractéristique du besoin de coordination de l'activité de télécommunication du premier dispositif d'émission et/ou de réception,
a2) on détermine une valeur d'au moins une deuxième grandeur ((P_{RSSI}, _{BT}, N; 15, 16, 17) caractéristique du côté du premier dispositif (3) d'émission et/ou de réception qui est caractéristique du besoin de coordination de l'activité de télécommunication du deuxième dispositif (4) d'émission et/ou de réception,
b1) on active ou on désactive la coordination de l'activité de télécommunication du premier dispositif (3) d'émission et/ou de réception en fonction de la valeur déterminée au stade a1) de procédé du côté du deuxième dispositif (4) d'émission et/ou de réception, et
b2) on active ou on désactive la coordination de l'activité de télécommunication du deuxième dispositif (4) d'émission et/ou de réception en fonction de la valeur déterminée au stade a2) de procédé du côté du premier dispositif (3) d'émission et/ou de réception.

3. Procédé suivant la revendication 1 ou 2,
**caractérisé**
**en ce que** la au moins une grandeur caractéristique est au moins l'une des grandeurs mentionnées ci-après :
- un niveau (P_{RSSI}, _{BT}, P_{RSSI}, _{WLAN}) de signal d' entrée ou
- un taux d'erreur de donnée, notamment un taux d'erreur de bit et/ou un taux d'erreur de paquet.

4. Procédé suivant l'une des revendications 1 à 3,
**caractérisé**
**en ce que** l'un des deux dispositifs (3, 4) d'émission et/ou de réception opère suivant la norme Bluetooth.

5. Procédé suivant la revendication 4,
**caractérisé**
**en ce que** l'un (3) des deux dispositifs (3, 4) d'émission et/ou de réception opère suivant la version 1.2 de la norme Bluetooth ou suivant une version supérieure et la grandeur caractéristique déterminée du côté de ce dispositif (3) d'émission et/ou de réception est au moins l'une des grandeurs mentionnées ci-après :
- une indication (15) du point de savoir si une liaison de télécommunication suivant le procédé spécifique à Bluetooth Adaptive-Frequency-Hopping est présente ou non, ou
- un nombre (N) des canaux ou paires de canaux classés comme étant bons ou mauvais dans une liaison de télécommunication suivant lé procédé spécifique à Bluetooth Adaptive-Frequency-Hopping.

6. Procédé suivant l'une des revendications précédentes,
**caractérisé**
**en ce que** l'un (4) des deux dispositifs (3, 4) d'émission et/ou de réception opère suivant la norme IEEE-802.11.

7. Procédé suivant l'une des revendications 1 à 6,
**caractérisé**
**en ce que** la coordination des activités de télécommunication empêche qu'ait lieu en même temps une activité de télécommunication du côté des deux dispositifs (3, 4) d'émission et/ou de réception, notamment que
- les deux dispositifs d'émission et/ou de réception émettent en même temps, ou
- les deux dispositifs d'émission et/ou de réception reçoivent en même temps, ou
- l'un des dispositifs d'émission et/ou de réception émet tandis que l'autre dispositif d'émission et/ou de réception reçoit en même temps.

8. Dispositif d'activation et de désactivation de la coordination des activités de télécommunication d'un premier dispositif (3) de téléphonie mobile d'émission et/ou de réception et d'un deuxième dispositif (4) de téléphonie mobile d'émission et/ou de réception dans un scénario dans lequel des activités de télécommunication simultanée des deux dispositifs d'émission et/ou de réception peuvent provoquer des dysfonctionnements de transmission et dans lequel pour la coordination des activités de télécommunication entre les deux dispositifs d'émission et/ou de réception, a lieu un échange d'information par ligne, comprenant
un premier moyen (24) de détermination d'au moins une première grandeur (20, 25, P_{RSSI}) caractéristique qui est caractéristique du besoin de coordination de l'activité de télécommunication du premier dispositif (3) d'émission et/ou de réception,
un deuxième moyen (14) de détermination d'au moins une deuxième grandeur (P_{RSSI}, _{BT}, N; 15, 16, 17) caractéristique qui est caractéristique du besoin de coordination de l'activité de télécommunication du deuxième dispositif (4) d'émission et/ou de réception,
un premier moyen (12) de commutation d'activation ou de désactivation de la coordination de l'activité de télécommunication du deuxième dispositif (4) d'émission et/ou de réception en fonction de la au moins une deuxième grandeur caractéristique ; et
un deuxième moyen (21) de commutation d'activation ou de désactivation de la coordination de l'activité de télécommunication du premier dispositif (3) d'émission et/ou de réception en fonction de la au moins une première grandeur caractéristique, dans lequel
le deuxième moyen (14) de détermination et le premier moyen (12) de commutation sont associés au premier dispositif (3) d'émission et/ou de réception et le premier moyen (24) de détermination et le deuxième moyen (21) de commutation sont associés au deuxième dispositif (4) d'émission et/ou de réception.

9. Dispositif d'activation et de désactivation de la coordination des activités de télécommunication d'un premier dispositif (3) de téléphonie mobile d'émission et/ou de réception et d'un deuxième dispositif (4) de téléphonie mobile d'émission et/ou de réception dans un scénario dans lequel des activités de télécommunication simultanée des deux dispositifs d'émission et/ou de réception peuvent provoquer des dysfonctionnements de transmission et dans lequel, pour la coordination des activités de télécommunication entre les deux dispositifs d'émission et/ou de réception, a lieu un échange d'information par ligne comprenant
au moins un moyen (14) de détermination d'au moins une grandeur (P_{RSSI}, _{BT}, N; 15, 16, 17) caractéristique qui est caractéristique du besoin de coordination de l'activité de télécommunication du premier dispositif d'émission et/ou de réception et de coordination de l'activité de télécommunication du deuxième dispositif d'émission et/ou de réception,
un premier moyen (12) de commutation d'activation ou de désactivation de la coordination de l'activité de télécommunication du deuxième dispositif (4) d'émission et/ou de réception en fonction de la au moins une grandeur caractéristique, et
un deuxième moyen (1) de commutation d'activation ou de désactivation de la coordination de l'activité de télécommunication du premier dispositif (3) d'émission et/ou de réception en fonction de la au moins une grandeur caractéristique dans lequel
le moyen (14) de détermination, le premier moyen (12) de commutation et le deuxième moyen (11) de commutation sont associés au dispositif (3) d'émission et/ou de réception ayant une puissance de sortie typique la plus petite.

10. Dispositif suivant l'une des revendications 8 ou 9,
**caractérisé**
**en ce que** la au moins une grandeur caractéristique est au moins l'une des grandeurs suivantes
- un niveau (P_{RSSI}, _{BT}, P_{RSSI, WLAN}) de signal d'entrée ou
- un taux d'erreur de donnée, notamment un taux d'erreur de bit et/ou un taux d'erreur de paquet.

11. Dispositif suivant l'une des revendications 8 à 10,
**caractérisé**
**en ce que** l'un (3) des deux dispositifs d'émission et/ou de réception est un dispositif d'émission et/ou de réception opérant suivant la norme Bluetooth.

12. Dispositif suivant la revendication 11,
**caractérisé**
**en ce que** l'un (3) des deux dispositifs d'émission et/ou de réception est un dispositif d'émission et/ou de réception fonctionnant suivant la version 1.2 de la norme Bluetooth ou suivant une version supérieure et la grandeur caractéristique déterminée du côté de ce dispositif (3) d'émission et/ou de réception est au moins l'une des grandeurs mentionnées ci-après
- une indication (15) du point de savoir si une liaison de télécommunication suivant le procédé spécifique à Bluetooth Adaptive-Frequency-Hopping est présente ou non, ou
- un nombre (N) des canaux ou paires de canaux classés comme étant bons ou mauvais dans une liaison de télécommunication suivant le procédé spécifique à Bluetooth Adaptive-Frequency-Hopping.

13. Dispositif suivant l'uné des revendications 8 à 12,
**caractérisé**
**en ce que** l'un (4) des deux dispositifs d'émission et/ou de réception est un dispositif d'émission et/ou de réception opérant suivant la norme IEEE-802.11.

14. Dispositif suivant l'une des revendications 8 à 13,
**caractérisé**
**en ce que** respectivement le ou les moyens (11, 12, 13) de commutation sont conçus pour supprimer l'échange d'information nécessaire à la coordination.
